# FASCICULE DE BREVET EUROPEEN

(11) **EP 0 964 138 B1**
(45) Date de publication et mention de la délivrance du brevet: **30.07.2003**
(21) Numéro de dépôt: 99401423.1
(22) Date de dépôt: 11.06.1999
(51) Int. Cl.: F02D 19/06, F02M 37/20

(54) **Procédé de contrôle de la pompe à essence dans un véhicule bi-carburation**
Verfahren zum Steuern der Kraftstoffpumpe in Fahrzeugen mit Doppeltbrennstoffvergasung
Method for controlling the fuel pump in vehicles with dual fuel carburation

(30) Priorité: 12.06.1998 FR 9807460
(43) Date de publication de la demande: 15.12.1999
(73) Titulaire: Renault s.a.s., 92100 Boulogne Billancourt (FR)
(72) Inventeur: Leveau, Patrick, 78660 Ablis (FR); Roque, Frédéric, 94450 Limeil Brevannes (FR)

(56) Documents cités:
- WO-A-83/03120
- WO-A-95/35441
- US-A- 5 479 906
- US-A- 5 505 165
- US-A- 5 509 392

## Description

Pour répondre aux normes d'anti-pollution atmosphérique visant à réduire les émissions de polluants, notamment de dioxyde de carbone, une solution consiste à utiliser comme carburant le Gaz de Pétrole Liquéfié, ou GPL. Ce carburant a pour avantages d'être très peu polluant, économique et immédiatement disponible.

Le GPL est un mélange de deux hydrocarbures, le butane et le propane, obtenus par raffinage du pétrole ou par séparation des hydrocarbures liquides contenus dans les gaz. Le GPL est un carburant gazeux à la pression atmosphérique et à la température ambiante. Par contre, il se liquéfie quand la pression augmente, de sorte qu'on peut le stocker aisément sous forme liquide dans un réservoir étanche adéquat, sous une pression de l'ordre de 7 bars. Cela permet de disposer d'une quantité importante d'énergie sous un volume relativement faible.

En raison d'une très bonne homogénéité du mélange air-carburant et d'une faible teneur en carbone et en soufre, le GPL pollue beaucoup moins que l'essence et dégage moins d'odeurs nauséabondes. Les émissions de dioxyde de carbone et d'oxyde de carbone sont réduites d'environ 12 % par rapport à celles de l'essence, entre autres.

En plus de ces avantages, le GPL a notamment un pouvoir calorifique supérieur à celui de l'essence, un indice d'octane plus élevé améliorant le rendement et diminuant la consommation, et une combustion plus rapide et plus complète.

Actuellement, les véhicules fonctionnant avec une bi-carburation, à l'essence et au GPL, comprennent, en plus du circuit d'essence classique piloté par un calculateur électronique de contrôle moteur et équipé d'un catalyseur avec sonde Lambda, un système d'alimentation du moteur en GPL associé à une commande d'inverseur de carburant manoeuvrée par le conducteur.

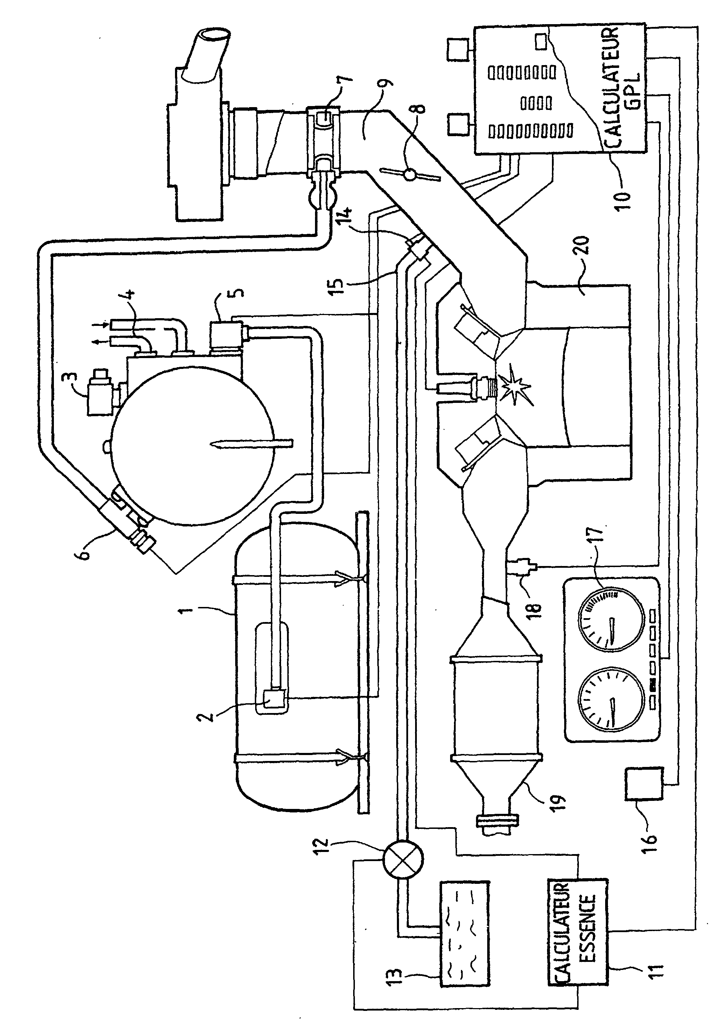

Comme le montre la figure unique qui est un schéma constitutif d'un moteur à bi-carburation, le système est constitué tout d'abord d'un réservoir 1, qui peut être cylindrique ou torique, doté d'une électrovanne 2 de sécurité destinée à isoler le réservoir dès l'arrêt du moteur.

Il est constitué également d'un évaporateur-détendeur 3, réchauffé par une dérivation du circuit d'eau 4 du moteur et destiné à transformer le GPL liquide sortant du réservoir en GPL gazeux. Il possède également une électrovanne 5 de sécurité complémentaire.

En sortie du détendeur 3 est placé un actuateur 6 de régulation de richesse pour assurer le dosage du GPL vers un mélangeur 7 air-gaz, de type Venturi, placé en amont du papillon 8 du circuit d'admission d'air 9 du moteur. Il a pour fonction de diffuser le GPL dans le circuit d'admission.

Un calculateur électronique 10 assure le pilotage de l'actuateur 6, la commande des électrovannes 2 et 5 de sécurité et la coupure de l'injection d'essence. Il est donc relié au calculateur 11 électronique de contrôle moteur du circuit essence. Il est également relié au tableau de bord 17 du véhicule qui possède un voyant témoin du fonctionnement du moteur au GPL.

Un commutateur 16 est relié au calculateur 10 de contrôle du circuit GPL, pour permettre au conducteur de sélectionner le mode de fonctionnement du moteur, à l'essence ou au GPL.

Le fonctionnement du système est le suivant, le GPL liquide sort du réservoir 1 sous pression et se vaporise dans le détenteur-évaporateur avant d'être introduit dans le circuit d'admission d'air, par l'intermédiaire du diffuseur-mélangeur en amont du papillon. La quantité de GPL gazeux aspirée est fonction de la pression interne du diffuseur. L'alimentation du moteur en GPL est contrôlée à partir de la mesure de la composition des gaz d'échappement, effectuée par la sonde Lambda 18 en amont du pot catalytique 19. Le dosage est ajusté par le moteur pas à pas de l'actuateur 6.

L'intérêt d'un véhicule fonctionnant avec un moteur à bi-carburation est que le conducteur dispose ainsi de deux sources d'énergie indépendantes, augmentant par conséquent son autonomie. Les deux énergies proviennent de deux réservoirs distincts, le réservoir d'essence d'origine n'ayant pas à subir de modification lors de l'implantation du réservoir de GPL.

Le réservoir de GPL est réalisé par emboutissage d'une tôle d'acier et conçu pour résister aux chocs et à la chaleur selon des normes établies.

Le problème que vise à résoudre l'invention concerne la protection de la pompe à essence d'un véhicule à bi-carburation. En effet, actuellement la pompe à essence 12 est destinée à prélever l'essence du réservoir 13 pour alimenter les cylindres du moteur par l'intermédiaire des injecteurs 14, situés en aval du papillon d'admission d'air, comme le montre la figure. Elle est commandée pour fonctionner en permanence, même lorsque le conducteur du véhicule a choisi l'alimentation au GPL. Ce mode de fonctionnement présente deux principaux inconvénients (voir WO 83/03120).

Le premier peut se produire en cas de panne d'essence. Bien que le conducteur ait choisi le fonctionnement en GPL, la pompe à essence n'est plus lubrifiée par l'essence et continue à tourner à sec. Elle finit par se détériorer par grippage et empêche le redémarrage du véhicule.

En effet, le moteur redémarre toujours à l'essence, même si le conducteur a choisi dès le départ le fonctionnement au GPL. Une commutation automatique de l'essence au GPL se produit au bout d'un certain temps de fonctionnement du moteur.

Un deuxième inconvénient provient du fait que, même en fonctionnement au GPL, la pompe à essence pompant ce carburant en permanence, l'essence passe indéfiniment dans le circuit de retour vers le réservoir au rythme de 100 litres par heure. Ce fonctionnement permanent entraîne une consommation inutile de courant électrique.

Le but de l'invention étant de pallier ces inconvénients, l'objet de l'invention est un procédé de contrôle du fonctionnement de la pompe à essence d'un moteur thermique dans un véhicule à bi-carburation, comprenant un premier système d'alimentation du moteur avec de l'essence piloté par un premier calculateur électronique, l'essence étant extraite d'un réservoir par une pompe et envoyée à travers une rampe en pression vers des injecteurs situés en aval du papillon d'air du circuit d'admission d'air du moteur, et un deuxième système d'alimentation au gaz de pétrole liquéfié (GPL) situé en amont dudit papillon et piloté par un deuxième calculateur électronique, caractérisé en ce que, en cas de fonctionnement du moteur au GPL, le calculateur électronique de gestion de l'alimentation du moteur en essence commande le moteur de la pompe à essence de façon intermittente et périodique, la durée de fonctionnement du moteur de la pompe à essence étant déterminée pour assurer la mise en pression de la rampe et la durée d'arrêt du moteur de la pompe à essence étant déterminée pour que la pression dans la rampe ne diminue pas en dessous de la valeur de pression résiduelle.

Selon une autre caractéristique de l'invention, le procédé consiste, en cas de température d'air et d'eau du moteur élevées au point d'entraîner une percolation de l'essence, à commander en permanence le fonctionnement de la pompe à essence.

D'autres caractéristiques et avantages de l'invention apparaîtront à la lecture de la description suivante.

Pour éviter, d'une part, les inconvénients précédemment décrits lors du fonctionnement permanent de la pompe à essence 12, pendant l'alimentation du moteur en GPL, et pour éviter, d'autre part, que le moteur de cette pompe ne se grippe en cas de fonctionnement irrégulier, ou si on ne le commande pas du tout, que la pression retombe dans la rampe 15 de mise en pression de l'essence, l'invention propose un fonctionnement intermittent et périodique.

Lorsque le conducteur du véhicule sélectionne l'alimentation en GPL, le calculateur électronique 11 de contrôle moteur commande le fonctionnement du moteur de la pompe à essence 12 pendant une durée déterminée pour assurer la mise en pression, de l'ordre de 3 à 3,5 bars, de la rampe 15 menant l'essence vers les injecteurs 14, de l'ordre de 8 secondes par exemple, avec une durée d'arrêt du moteur de la pompe à essence de l'ordre de 30 minutes. Cette durée d'arrêt est calculée en fonction du type de pompe et de la calibration du circuit d'injection d'essence pour que la pression dans la rampe ne descende pas en dessous de la pression résiduelle. Cette valeur de pression, voisine de 1 bar, est un seuil en dessous duquel la commutation de l'alimentation en GPL vers l'alimentation en essence se fait difficilement sans à-coups ressenti par le conducteur.

Le fonctionnement intermittent et périodique permet aussi de dégommer la pompe électrique lorsqu'un conducteur utilise principalement son véhicule au GPL et pour réaliser le diagnostic du circuit de commande de la pompe. Au démarrage du véhicule, même dans le cas d'une alimentation en GPL choisie dès le départ par le conducteur, la pompe à essence est commandée pendant au moins une seconde à la mise du contact, pour assurer un démarrage obligatoire à l'essence.

Lorsque le conducteur a choisi une alimentation du moteur en essence, la pompe fonctionne continuellement.

Lorsque la température de l'air et la température de l'eau du moteur sont élevées, dépassant chacun un seuil de l'ordre de 60°C et 100°C respectivement, pouvant entraîner des risques de percolation de l'essence, c'est-à-dire que l'essence se vaporise dans le circuit d'alimentation, la pompe est commandée de façon permanente.

## Revendications

1. Procédé de contrôle du fonctionnement de la pompe à essence d'un moteur thermique dans un véhicule à bi-carburation, comprenant un premier système d'alimentation du moteur avec de l'essence piloté par un calculateur électronique, l'essence étant extraite d'un réservoir par une pompe et envoyée à travers une rampe en pression vers des injecteurs situés en aval du papillon d'air du circuit d'admission d'air du moteur, et un deuxième système d'alimentation au gaz de pétrole liquéfié (GPL) situé en amont dudit papillon, **caractérisé en ce que**, en cas de fonctionnement du moteur au GPL, le calculateur électronique (11) de gestion de l'alimentation du moteur en essence commande le moteur de la pompe à essence (12) de façon intermittente et périodique, la durée de fonctionnement dudit moteur de la pompe étant déterminée pour assurer la mise en pression de la rampe (15) et la durée d'arrêt dudit moteur étant déterminée pour que la pression dans la rampe ne diminue pas en dessous de la valeur de pression résiduelle.

2. Procédé de contrôle selon la revendication 1, **caractérisé en ce que**, le conducteur du véhicule ayant sélectionné l'alimentation du moteur en GPL, la pompe à essence (12) est commandée de façon permanente lorsque les valeurs de la température d'air et de la température de l'eau du moteur sont supérieures à des seuils au-delà desquels l'essence subit un phénomène de percolation.

3. Procédé de contrôle selon la revendication 1, **caractérisé en ce que** la durée de fonctionnement du moteur de la pompe à essence (12), commandée par le premier calculateur électronique (11) est égale à 8 secondes.

4. Procédé de contrôle selon la revendication 1, **caractérisé en ce que** la durée d'arrêt du moteur de la pompe à essence (12), commandée par le premier calculateur électronique (11) est égale à 30 minutes.

## Patentansprüche

1. Verfahren zur Steuerung des Betriebes der Benzinpumpe eines Verbrennungsmotors für ein mit doppelter Kraftstoffversorgung ausgerüstetes Fahrzeug mittels eines ersten Systems zur Versorgung des Motors mit Benzin, das von einem ersten elektronischen Rechner gesteuert wird, wobei das Benzin von einem Tank durch eine Pumpe über eine Engstelle für die Druckerhöhung den stromabwärts der im Einlasskreis für die Luft angeordneten Drosselklappe für die Luftzufuhr angeordneten Einspritzdüsen zugeführt wird und mittels eines zweiten Systems zur Versorgung des Motors mit Flüssiggas ( GPL ), das stromaufwärts der Drosselklappe angeordnet ist, **dadurch gekennzeichnet, dass** im Fall des Antriebs des Motors mit Flüssiggas der elektronische Rechner (11) für die Überwachung der Versorgung des Motors mit Benzin den Motor der Benzinpumpe (12) in intermittierender und periodischer Weise derart ansteuert, dass die Betriebszeit des Motors der Benzinpumpe derart bemessen ist, dass die Beaufschlagung der Engstelle (15) mit Druck gewährleistet ist und dass die Dauer des Stillstands dieses Motors derart festgelegt wird, dass der Druck in der Engstelle nicht unterhalb eines Wertes für den Restdruck fällt.

2. Verfahren zur Steuerung nach Anspruch 1, **dadurch gekennzeichnet, dass**, wenn der Fahrer des Fahrzeuges auf den Antrieb des Motors mit Flüssiggas umgeschaltet hat, die Benzinpumpe (12) derart angesteuert wird, dass sie permanent läuft, wenn die Werte für die Temperatur der Luft und für die Temperatur des Kühlwassers für den Motor oberhalb von Schwellwerten liegen, bei denen ein Perkollieren des Benzins einsetzt.

3. Verfahren zur Steuerung nach Anspruch 1, **dadurch gekennzeichnet, dass** die Dauer des Betriebes des Motors der Benzinpumpe (12), die vom elektronischen Rechner (11) gesteuert wird, 8 Sekunden beträgt.

4. Verfahren zur Steuerung nach Anspruch 1, **dadurch gekennzeichnet, dass** die Dauer des Stillstands des Motors der Benzinpumpe (12), die durch den ersten elektronischen Rechner (11) gesteuert wird, 30 Minuten beträgt

## Claims

1. Method for controlling the operation of the fuel pump of a combustion engine in a vehicle with dual carburetion, comprising a first system for supplying the engine with fuel controlled by an electronic computer, the fuel being extracted from a reservoir by a pump, and sent through a pressurised distributor towards injectors located downstream of the air valve of the engine air intake circuit, and a second system for supplying liquefied petroleum gas (LPG) located upstream of said valve, **characterised in that** where the engine is operating with LPG, the electronic computer (11) for managing the supply of fuel to the engine controls the fuel pump motor (12) in an intermittent and periodic manner, the duration of operation of said pump motor being determined such as to ensure pressurisation of the distributor (15) and the duration of stoppage of said motor being determined such that the pressure in the manifold does not reduce below the residual pressure value.

2. Method for control according to claim 1, **characterised in that** when the vehicle driver has selected the supply of LPG to the engine, the fuel pump (12) is controlled in a continuous manner when the values of the air temperature and engine water temperature are greater than thresholds, above which the fuel is subject to a percolation phenomenon.

3. Method of control according to claim 1, **characterised in that** the duration of operation of the fuel pump motor (12), controlled by the first electronic computer (11), is 8 seconds.

4. Method of control according to claim 1, **characterised in that** the duration of stoppage of the fuel pump motor (12), controlled by the first electronic computer (11), is 30 minutes.
